# EUROPÄISCHE PATENTSCHRIFT

(11) **EP 0 864 756 B1**
(45) Veröffentlichungstag und Bekanntmachung des Hinweises auf die Patenterteilung: **16.04.2003**
(21) Anmeldenummer: 98102474.8
(22) Anmeldetag: 13.02.1998
(51) Int. Cl.: F04D 29/12

(54) **Leckagerückführanordnung bei einer Dichtungseinrichtung**
Leakage feed-back system in a sealing device
Système de recirculation de fuites dans un dispositif d'étanchéité

(30) Priorität: 11.03.1997 DE 29704389 U
(43) Veröffentlichungstag der Anmeldung: 16.09.1998
(73) Patentinhaber: Burgmann Dichtungswerke GmbH & Co. KG, 82515 Wolfratshausen (DE)
(72) Erfinder: Riebel, Hartmut, 82515 Wolfratshausen (DE); Kollinger, Rudolph, 82549 Königsdorf (DE); Matz, Berthold, Dr., 82515 Wolfratshausen (DE)
(74) Vertreter: Schmidt, Horst, Dr.

(56) Entgegenhaltungen:
- DE-A- 3 337 839
- DE-A- 4 318 158
- US-A- 2 124 681
- US-A- 3 976 391

## Beschreibung

Die Erfindung betrifft eine Anordnung zur Rückführung der Leckage eines Mediums längs einer Dichtungseinrichtung gemäss dem Oberbegriff des Patentanspruchs 1.

Die Erfindung betrifft insbesondere die emissionsminimierte Abdichtung eines Druckraumes, z.B. desjenigen einer Pumpe, gegenüber der Aussenumgebung, indem verhindert wird, dass Leckage längs einer Dichtungseinrichtung an die Aussenumgebung gelangen kann. Leckage von Medien, welche die Sicherheit und/oder Umwelt gefährden können, sollte zurück in den Förderstrom geführt werden, um eine wie auch immer gestaltete Berührung der Leckage mit der Aussenumgebung zu vermeiden. Derartige Leckagerückführsysteme sind bekannt (vgl. z.B. DE-C-3337839). Dabei wird ein vom Hauptförderstrom einer Pumpe permanent abgezweigter Teilstrom zum Antrieb einer Venturi-Strahlpumpe ausgenutzt, die in einer Leckagerückführleitung eine Strömung zwischen einer Stelle abstromseitig der Dichtungseinrichung und einer geeigneten Stelle einer Pumpenkammer induziert. Hierbei kann nicht ausgeschlossen werden, dass, wenn keine Leckage anliegt, die Strahlpumpe Luft aus der Umgebung ansaugt und in den Hauptförderstrom einführt. Ferner wurde zur Überwachung der Leckage bei Gleitringdichtungen schon vorgeschlagen (Burgmann, ABC der Gleitringdichtung, 1988 Burgmann-Selbstverlag, S. 140), die Leckage in einer Sammelkammer zu sammeln und diese von Zeit zu Zeit zu entleeren, indem die Kammer bei Erreichen einer bestimmten Füllstandshöhe unter einen erhöhten Druck durch Zufuhr von z.B. Druckluft aus einer externen Druckluftquelle gesetzt wird. Diese Art der Leckagerückführung hat ebenfalls den Nachteil, dass in den Hauptförderstrom nicht nur die Leckage des Mediums, sondern auch ein Fremdmedium in Gestalt der Druckluft hineingelangen kann, was eine nicht zulässige Verschmutzung des Mediums bedeuten würde. Darüber hinaus liesse sich ein druckluftgesteuertes Leckagerückführsystem nur schwer in abgekapselter Bauweise ausbilden.

Aufgabe der Erfindung ist es, eine Leckagerückführanordnung zu schaffen, die eine umweltverträgliche Rückführung der Leckage in den Förderstrom des abzudichtenden Mediums ermöglicht, ohne dass die Gefahr des Einführens eines Fremdmediums wie Luft in den Medimhauptstrom besteht. Die Leckagerückführanordnung soll ferner ohne weiteres in explosionssicherer abgekapselter Bauweise ausgebildet werden können.

Eine Leckagerückführanordnung, mit der diese Aufgabe gelöst wird, zeichnet sich durch die Merkmale im kennzeichnenden Teil des . Anspruchs 1 aus. Die erfindungsgemässe Leckagerückführanordnung umfasst eine systemeigene Pumpeinrichtung, die als Antrieb die Strömungsenergie eines aus einem Hauptförderstrom, z.B. einer Pumpe, abgezweigten Teilstromes, der in einer Abzweigleitung fliesst, ausnutzt, so dass die Pumpeinrichtung ohne externen Antrieb auskommt und damit ohne weiteres in abgekapselter Bauweise in die Rückführanordnung integriert werden kann. Die Pumpeinrichtung ermöglicht das Anlegen einer Saugkraft an einen Leckagezwischenspeicher als ebenfalls abkapselbares Teil der Rückführanordnung. Selbst wenn der Druck des Mediums im Hauptförderstrom höher als derjenige der Leckage im Zwischenspeicher ist, kann eine kontinuierliche oder periodische Leerung des Zwischenspeichers erfolgen, so dass die Leckage z.B. in den Ansaugstutzen einer Pumpe trotz des darin herrschenden höheren Ansaugdruckes zurückgeführt werden kann. Die Leckagerückführanordnung kommt auch ohne Energiezufuhr durch ein Fremdmedium, wie ein Druckgas, aus. Bei der fremdmediumfrei angetriebenen Pumpeinrichtung kann es sich um eine Strahlpumpe oder um eine Förderpumpe handeln, die von einer vom Teilstrom beaufschlagten Turbine angetrieben wird. Erfindungsgemäss erfolgt die Leckagerückführung in Abhängigkeit von der Füllstandshöhe im Leckagezwischenspeicher, so dass eine Leckagerückführung nur dann stattfindet, wenn dies aufgrund der Füllstandshöhe im Leckagezwischenspeicher erforderlich wird. Dadurch ist gewährleistet, dass ausser der Leckage kein anderes Medium, z.B. Luft in den Hauptförderstrom gelangen kann. Gemäss einer Weiterbildung der Erfindung kann ferner ein in Abhängigkeit von der Füllstandshöhe an Leckage im Leckagezwischenspeichers betätigbares Absperrventil zum Schliessen und Öffnen der Rückstromabzweigleitung vorgesehen sein. Eine Teilstromabzweigung wird dann auf die Zeitdauer begrenzt, bei der eine Leerung des Zwischenspeichers erfolgt. Während der übrigen Zeit beeinträchtigt die Teilstromabzweigung die Wirksamkeit der Pumpe nicht.

Die Erfindung wird nachfolgend anhand von Ausführungsformen und der Zeichnung näher erläutert. Es zeigen:
Fig. 1 in teilweise schematischer geschnittener Ansicht eine Leckagerückführanordnung gemäss einer ersten Ausführungsform der Erfindung bei Anwendung bei einer Kreiselpumpe,
Fig. 2 in einer Ansicht und Umgebung ähnlich Fig. 1 eine Leckagerückführanordnung gemäss einer zweiten Ausführungsform der Erfindung.

Obschon die Erfindung nachfolgend in Verbindung mit der Anwendung bei einer Förderpumpe, insbesondere Kreiselpumpe, beschrieben wird, versteht es sich, dass die Erfindung auf dieses Anwendungsgebiet nicht beschränkt ist. Die Erfindung kann vielmehr vorteilhaft auf anderen Gebieten angewendet werden, bei denen ein unter Druck stehender Raum gegenüber einer druckentlasteten Umgebung durch eine Dichtungseinrichtung abgedichtet und eine Leckage des abzudichtenden Mediums längs der Dichtungeinrichtung in umweltverträglicher Weise gehandhabt werden soll.

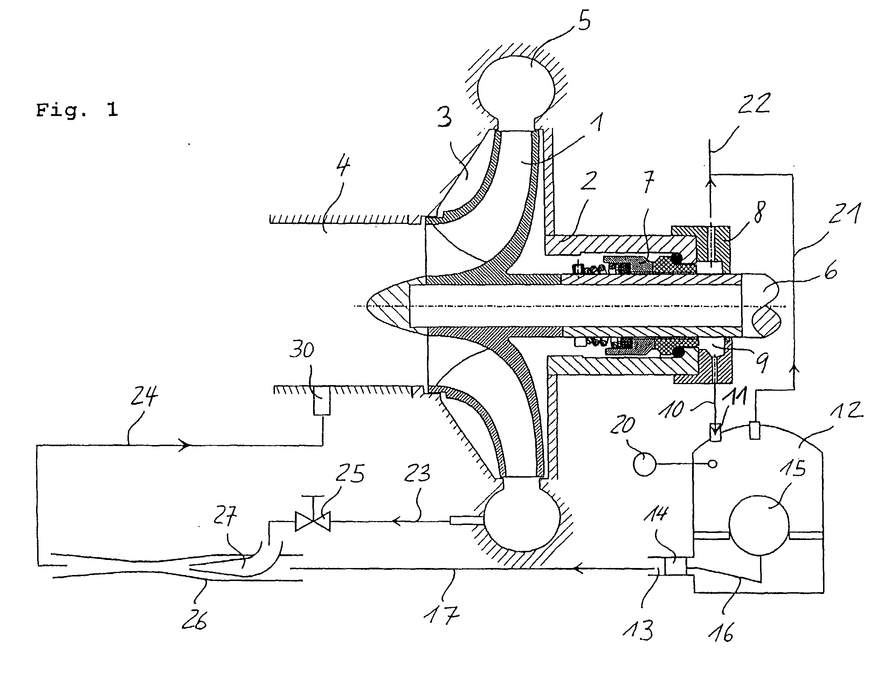

Mit Bezug auf Fig. 1, die die erste Ausführungsform der Erfindung zeigt, betrifft das Bezugszeichen 1 das Laufrad einer Kreiselpumpe und das Bezugszeichen 2 deren Gehäuse. Das Gehäuse 2 definiert einen Druckraum 3, in dem das Laufrad 1 drehbar aufgenommen ist. Bei der Drehung des Laufrades 1 wird ein in einem Ansaugstutzen oder Niederdruckbereich 4 anstehendes Fördermedium angesaugt und zu einem radial aussenliegenden Ausstossbereich 5 beschleunigt und dabei unter Druck gesetzt.

Wie dargestellt, ist das Laufrad 1 auf einer horizontalen Welle 6 montiert, die durch das Gehäuse 2 nach aussen zu einer nicht gezeigten Antriebseinrichtung geführt ist. Zur Abdichtung der Welle gegenüber dem Gehäuse 2 ist eine Dichtungseinrichtung 7 vorgesehen, die vorzugsweise in Form einer Gleitringdichtung ausgebildet ist. Die Gleitringdichtung kann einen Aufbau haben, wie er in Burgmann Konstruktionsmappe 14 "Gleitringdichtung", S. 27, erläutert ist, so dass hierauf Bezug genommen werden kann.

Die Dichtungseinrichtung 7 hat die Aufgabe, den Druckraum 3 der Kreiselpumpe gegenüber einem druckentlasteten ringförmigen Leckagesammelraum 9 abzudichten, der sich umfänglich der Welle 6 abstromseitig der Dichtungseinrichtung 7 erstreckt und in einem von der Welle durchsetzten Aufsatzteil 8 ausgebildet sein kann. Der Aufsatzteil 8 kann am Gehäuse 2, z.B. durch eine Schraubverbindung oder dgl., befestigt sein. Eine Leckage des Fördermediums aus dem Druckraum 3 längs der Dichtungseinrichtung 7 wird sich bevorzugt im unteren Bereich des Leckagesammelraums 9 ansammeln. Gasförmige Anteile der Leckage können über eine Druckentlastungsleitung 22, die mit dem oberen Bereich des Leckagesammelraums 9 in Verbindung steht, nach aussen z.B. zu einer Abfackelungsstelle abgeführt werden.

Der Leckagesammelraum 9 ist über eine Verbindungsleitung 10 und ein darin angeordnetes Absperrventil 11 mit dem Inneren eines Speicherbehälters 12 verbunden, der einen Zwischenspeicher darstellt, in den die nicht flüchtigen Anteile der Leckage, die sich im Leckagesammelraum 9 angesammelt haben, eingeführt werden können. Das Absperrventil 11 ermöglicht eine Strömung der Leckage vom Sammelraum 9 in den Speicherbehälter 12, während es eine Strömung in entgegengesetzter Richtung verhindert.

Ein verschliessbarer Auslass 13 nahe dem Boden des Speicherbehälters 12 ist über eine Leitung 17 mit der Ansaugseite einer Pumpeinrichtung verbunden, die das allgemeine Bezugszeichen 18 trägt und nachfolgend näher beschrieben wird. Zum Öffnen und Schliessen des Auslasses 13 ist ein bei 14 angedeutetes Schliesselement vorgesehen, das in Abhängigkeit von der Füllstandshöhe im Speicherbehälter 12 betätigt werden kann. Obschon andere Betätigungseinrichtungen verwendet werden können, ist bei der vorliegenden Ausführungsform ein Schwimmer 15 im Speicherbehälter 12 angeordnet, der über einen Gestängemechanismus 16 mit dem Schliesselement 14 verbunden ist. Sobald die Leckage im Speicherbehälter 15 eine bestimmte obere Füllstandshöhe erreicht hat, bewegt der Schwimmer 15 das Schliesselement 14 in die Freigabestellung, so dass das Innere des Speicherbehälters 12 über die Leitung 17 mit der Pumpeinrichtung 18 in Verbindung gebracht wird. Das Schliesselement 14 verschliesst den Auslass 13 wieder, wenn die Füllstandshöhe auf ein unteres Niveau abgefallen ist, so dass stets ein Rest an Leckage im Speicherbehälter 12 zurückgehalten wird.

Eine Überwachungseinrichtung 20 kann vorgesehen sein, um eine übermässige Füllstandshöhe im Speicherbehälter 12 zu erfassen und ein Alarmsignal abzugeben, wenn die in den Speicherbehälter 12 eingeführte Leckagemenge grösser als diejenige ist, die über den Auslass 13 abgeführt werden kann.

Die Pumpeinrichtung 18 kann als Strahlpumpe ausgebildet sein, die als Treibermedium eine vom Hochdruck- zum Niederdruckbereich der Kreiselpumpe strömende eingeschränkte Teilmenge des Fördermediums verwendet, das aus dem Hauptförderstrom der Kreiselpumpe abgezweigt wird, indem eine Strahldüse 27 der Pumpeinrichtung 18 über eine Rückströmleitung 23 mit dem Ausstossbereich 5 der Kreiselpumpe verbunden ist. Die Strahldüse 27 ist in einem Strahlrohr 26 so angeordnet, dass das von der Strahldüse 27 abgegebene Fördermedium im Strahlrohr 26 ein Drückgefälle zwischen einem Ansaug- und Ausstossende des Strahlrohres erzeugt. Das Ansaugende des Strahlrohres 26 ist mit der zum Auslass 13 des Speicherbehälters 12 führenden Leitung 17 und das Ausstossende über eine Leitung 24 mit dem Ansaugstutzen 4 der Kreiselpumpe verbunden, wie dies bei 30 angedeutet ist.

Das zwischen dem Ausstossbereich 5 der Kreiselpumpe über die Rückströmleitung 23, die Pumpeinrichtung 18 und die Leitung 24 zum Ansaugstutzen 4 strömende Fördermedium schafft auf diese Weise in der Leitung 17 eine Saugkraft, die bei geöffnetem Auslass 13 des Speicherbehälters 12 eine Strömung der darin angesammelten Leckage in die Pumpeinrichtung 18 und von dort zusammen mit dem abgezweigten Fördermedium über die Leitung 24 in den Ansaugstutzen 4 bewirkt.

Es kann ein permanenter Teilstrom an Fördermedium aus dem Ausstossbereich 5 der Kreiselpumpe über die Rückströmleitung 23 abgezweigt werden. Um die Menge an abgezweigtem Fördermedium niedrig zu halten, sollte die Durchlasskapazität der Rückstromleitung 23 auf ein geeignetes minimales Mass reduziert werden. Ferner kann in der Rückstromleitung 23 ein Absperrventil 25 vorgesehen sein, welches in Abhängigkeit von der Stellung des Schliesselementes 14 betätigbar ist, so dass eine Abzweigung von Fördermedium längs der Rückstromleitung 23 nur stattfindet, wenn der Auslass 13 des Speicherbehälters 12 geöffnet ist.

Mit 21 ist eine Leitung angedeutet, die einen oberen Bereich des Speicherbehälters 12 mit der Druckentlastungsleitung 22 verbindet. Im oberen Bereich des Speicherbehälters 12 angesammelte gasförmige Anteile der Leckage können daher über die Leitungen 21 und 22 zur Abfackelungsstelle geführt werden. Gleichzeitig wird hierdurch ein Druckaufbau im Speicherbehälter 12 vermieden.

Die, wie vorbeschrieben aufgebaute Leckage-Rückführanordnung arbeitet wie folgt:

Sobald die Menge an aus dem Sammelraum 9 über die Leitung 10 und das Absperrventil 11 in den Speicherbehälter 12 kontinuierlich oder diskontinuierlich eingeführte Leckage eine bestimmte Füllstandshöhe erreicht hat, bewirkt der Schwimmer 15 ein Öffnen des Auslasses 13 und wird gleichzeitig oder zeitverzögert das Absperrventil 25 in der Rückströmleitung 23 geöffnet. Infolge der dadurch in der Rückströmleitung 23 geschaffenen Strömung des Fördermediums vom Ausstossbereich 5 zum Ansaugstutzen 4 der Kreiselpumpe entsteht in der Pumpeinrichtung 18 ein Druckgefälle, so dass an dem Auslass 13 des Speicherbehälters 12 eine Saugkraft angelegt wird, die eine Leerung des Speicherbehälters 12 bewirkt, bis die Füllstandshöhe auf ein Niveau abgefallen ist, bei dem der Schwimmer 15 den Auslass 13 des Speicherbehälters 12 erneut verschliesst. Gleichzeitig oder zeitverzögert wird auch das Absperrventil 25 wieder geschlossen und damit eine Strömung des Fördermediums zwischen dem Ausstossbereich 5 und Ansaugstutzen 4 der Kreiselpumpe unterbunden.

Anstelle einer Pumpeinrichtung 18 in Gestalt einer Strahlpumpe mit einer in einem Strahlrohr 26 angeordneten Strahldüse 27 könnte auch eine Strahlpumpe mit vereinfachtem Aufbau vorgesehen werden, bei der die Leckagerückführleitung nahe einer geschwindigkeitserhöhenden Strömungsengstelle eines longitudinal vom Fördermedium durchströmten Strahlrohres angeschlossen ist.

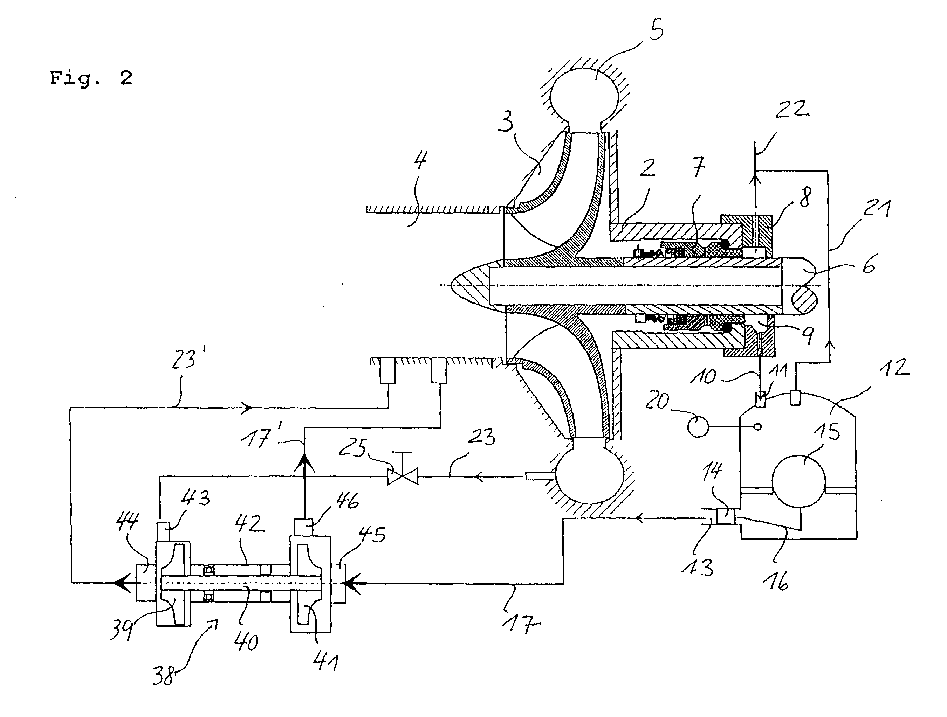

In Fig. 2, die eine zweite Ausführungsform der Erfindung zeigt, tragen gleiche Teile wie bei der ersten Ausführungsform die gleichen Bezugszeichen. Für diese Aufbauteile erübrigt sich daher eine erneute Beschreibung.

Im wesentlichen unterscheidet sich die zweite von der ersten Ausführungsform im Aufbau der Pumpeinrichtung. Die Pumpeinrichtung 38 ist hier als turbinengetriebene Förderpumpe ausgebildet, indem auf einer gemeinsamen Welle 40, die in einem Pumpengehäuse 42 drehbar gehalten ist, ein Turbinenrad 39 und ein Pumpenrad 41 angeordnet sind. Ein Einlasstutzen 43 in eine erste Kammer des Pumpengehäuses, in der das Turbinenrad 39 angeordnet ist, steht mit der Rückströmleitung 23 zur Beaufschlagung des Turbinenrades 39 mit der Strömungsenergie des vom Ausstossbereich 5 der Kreiselpumpe abgezweigten Fördermediums in Verbindung, um das Turbinenrad 39 in Drehung zu versetzen. Das Fördermedium verlässt die erste Kammer über einen axialen Auslasstutzen 44 des Pumpengehäuses 42, der über einen Abschnitt 23' der Rückstromleitung 23 mit dem Ansaugstutzen 4 der Kreiselpumpe verbunden ist.

Das vom Turbinenrad 39 angetriebene Pumpenrad 41 läuft in einer zweiten Kammer des Pumpengehäuses 42, in die die Leckage aus dem Speicherbehälter 12 über einen Ansaugstutzen 45 eingeführt werden kann. Mittels des Pumpenrades 41 wird die Leckage zu einem Auslasstutzen 46 der zweiten Kammer gepumpt, der mit einem Abschnitt 17' der Rückführleitung 17 verbunden ist, der in den Ansaugstutzen 4 der Kreiselpumpe mündet.

Bei beiden vorbeschriebenen Ausführungsformen der Erfindung erfolgt keine stetige Rückführung der angesammelten Leckage, sondern deren Zwischenlagerung im Speicherbehälter 12. Bei einer stetige Leckagerückführung bestünde die Gefahr eines Ansaugens von Gas, wenn keine Leckage ansteht. Die Leckagezwischenlagerung in Verbindung mit einem Schliesselement zum Öffnen und Schliessen des Auslasses des Speicherbehälters in Abhängigkeit von der darin befindlichen Füllstandshöhe tritt einer derartigen Gefahr wirksam entgegen.

## Patentansprüche

1. Anordnung zur Rückführung der Leckage eines Mediums längs einer Dichtungseinrichtung zur Abdichtung eines in einen Nieder- und Hochdruckbereich (4,5) unterteilten Druckraumes (3) gegenüber einem Leckagesammelraum (9), mit einer von der Strömungsenergie eines in einer den Hoch- und Niederdruckbereich (4,5) des Druckraumes (3) miteinander verbindenden Rückstromleitung (23) strömenden abgezweigten Teils des Mediums angetriebenen Pumpeinrichtung (18,38) zum Anlegen einer Saugkraft an eine den Leckagesammelraum mit dem Druckraum verbindenden Leckagerückführleitung (10,17,24), **dadurch gekennzeichnet, dass** in einem Abschnitt der Leckagerückführleitung zwischen dem Leckagesammelraum (9) und der Pumpeinrichtung (18,38) ein Leckagespeicherbehälter (12) angeordnet ist, in den die im Leckagesammelraum angesammelte Leckage zur Zwischenspeicherung einführbar ist, und dass eine in Abhängigkeit von der Füllstandshöhe an Leckage im Leckagespeicherbehälter betätigbare Schliesseinrichtung (14) zum füllstandshöhenabhängigen Schliessen und Öffnen einer Verbindung zwischen dem Leckagespeicherbehälter und der Pumpeinrichtung vorgesehen ist.

2. Anordnung nach Anspruch 1, **dadurch gekennzeichnet, dass** dass in der Rückstromleitung (23) ein bei einem Öffnen der Verbindung zwischen dem Leckagespeicherbehälter (12) und der Pumpeinrichtung öffnendes Absperrventil (25) vorgesehen ist.

3. Anordnung nach Anspruch 1 oder 2, **dadurch gekennzeichnet, dass** die Pumpeinrichtung eine vom Mediumstrom in der Rückstromleitung (23) als Treibermittel beaufschlagte Strahlpumpe (18) zum Anlegen einer Saugkraft an den Auslass (13) des Leckagespeicherbehälters (12) umfasst.

4. Anordnung nach Anspruch 1 oder 2, **dadurch gekennzeichnet, dass** die Pumpeinrichtung eine vom Mediumstrom in der Rückstromleitung (23) beaufschlagte Turbinenanordung (39-44) zum Antrieb einer ansaugseitig mit dem Auslass (13) des Leckagespeicherbehälters (12) verbundenen Leckageförderpumpe (41-46) umfasst.

5. Anordnung nach Anspruch 2, **dadurch gekennzeichnet, dass** die Schliesseinrichtung (14) schwimmerbetätigt ist und das Absperrventil (25) entsprechend der Position der schwimmerbetätigten Schliesseinrichtung (14) angesteuert ist.

6. Anordnung nach einem der vorgehenden Ansprüche, **dadurch gekennzeichnet, dass** der Leckagesammelraum (9) und/oder der Leckagespeicherbehälter (12) druckentlastbar sind.

7. Anordnung nach einem der vorhergehenden Ansprüche, **dadurch gekennzeichnet, dass** bei Anwendung bei einer Pumpe die Rückstromleitung (23) den Ansaug- (4) mit dem Ausstossbereich (5) der Pumpe verbindet.

## Claims

1. A device for recycling leakage of a medium along a sealing means for sealing a pressure chamber (3) divided into a low and a high pressure zone (4,5) with respect to a leakage collection chamber (9), including a pumping means (18,38) driven by the flow-energy of a branched-off part of the medium flowing in a return conduit (23) connecting the high and low pressure zones (4,5) of the pressure chamber (3) for applying a suction force to a leakage recycling conduit (10,17,24) connecting the leakage collecting chamber to the pressure chamber, **characterised in that** in a section of the leakage recycling conduit between the leakage collecting chamber (9) and the pumping means (18,38) a leakage storage container. (12) is arranged, into which the leakage accumulated in the leakage collecting chamber can be introduced for intermediate storage, and **in that** a closing means (14) is provided for closing and opening a connection between the leakage storage container and the pumping means, said closing means being operated in dependence on the level of leakage accumulated in the leakage storage container.

2. The device according to claim 1, **characterised in that** a check valve (25) is provided in the return conduit (23), said valve being opened when the connection between the leakage storage container (12) and the pumping means is open.

3. A device according to claim 1 or 2, **characterised in that** the pumping means comprises a jet pump (18) for applying a suction force to the outlet (13) of the leakage storage container (12), said jet pump being operated by the flow of medium in the return conduit (23) as a driving means.

4. A device according to claim 1 or 2, **characterised in that** the pumping means comprises a turbine means (39-44) for driving a leakage feed pump (41-46) connected at the intake end thereof to the outlet (13) of the leakage storage container (12), said turbine means being operated by the flow of medium in the return conduit (23).

5. A device according to claim 2, **characterised in that** the closing means (14) is actuated by a float and the check valve (25) is controlled in correspondence with the position of the float-actuated closing means (14).

6. A device according to any of the preceding claims, **characterised in that** the leakage collection chamber (9) and/or the leakage storage container (12) are adapted to be relieved of pressure.

7. A device according to any of the preceding claims, **characterised in that** when used with a pump, the return conduit (23) connects the intake side (4) to the exhaust side (5) of the pump.

## Revendications

1. Dispositif pour ramener les fuites d'un produit le long d'un dispositif d'étanchement destiné à étancher une chambre de pression (3) divisée en une zone de basse pression et une zone de haute pression (4, 5) par rapport à une chambre collectrice du produit de fuite (9), avec un dispositif de pompage (18, 38) entraîné par l'énergie dégagée par la circulation d'uns partie du fluide dévié et circulant dans une conduite de retour (23) reliant entre elles les zones de haute et de basse pression (4, 5) de la chambre de pression (3), lequel dispositif de pompage est destiné à créer une force d'aspiration dans une conduite de retour du produit de fuite (10, 17, 24) reliant la chambre collectrice du produit de fuite à la chambre de pression, **caractérisé en ce que** dans un tronçon de la conduite de retour du produit de fuite, entre la chambre collectrice du produit de fuite (9) et le dispositif de pompage (18, 38) est placé un réservoir de stockage du produit de fuite (12) dans lequel le produit de fuite collecté dans la chambre collectrice du produit de fuite peut être déversé pour être stocké temporairement, et **en ce qu'**un dispositif de fermeture (14) pouvant être actionné en fonction du niveau de remplissage du réservoir de stockage du produit de fuite est prévu pour fermer et ouvrir en fonction dudit niveau de remplissage une liaison entre le réservoir de stockage du produit de fuite et le dispositif de pompage.

2. Dispositif selon la revendication 1, **caractérisé en ce qu'**une soupape d'arrêt (25) s'ouvrant lorsque s'ouvre la liaison entre le réservoir de stockage du produit de fuite (12) et le dispositif de pompage est prévue dans la conduite de retour (23).

3. Dispositif selon la revendication 1 ou 2, **caractérisé en ce que** le dispositif de pompage comprend un éjecteur (18) qui est sollicité par le produit circulant dans la conduite retour (23) faisant fonction de jet moteur afin de produire une aspiration appliquée au niveau de la sortie (13) du réservoir de stockage du produit de fuite (12).

4. Dispositif selon la revendication 1 ou 2, **caractérisé en ce que** le dispositif de pompage comprend une installations de turbine (39-44) sollicitée par le produit circulent dans la conduite retour (23) pour entraîner une pompe de circulation pour le produit de fuite (41-46) reliée du côté de l'aspiration à la sortie (13) du réservoir de stockage du produit de fuite (12).

5. Dispositif selon la revendication 2, **caractérisé en ce que** le dispositif de fermeture (14) est actionné par un flotteur et **en ce que** la soupape d'arrêt (25) est commandée en fonction de la position du dispositif de fermeture actionné par flotteur (14).

6. Dispositif selon l'une des revendications précédentes, **caractérisé en ce que** la chambre collectrice du produit de fuite (9) et/ou le réservoir de stockage du produit de fuite (12) peuvent être décompressés.

7. Dispositif selon l'une des revendications précédentes, **caractérisé en ce que** dans le cas où une pompe est utilisée, la conduite de retour (23) relie la zone d'aspiration (4) à la zone de refoulement (5).
